(19) Europäisches Patentamt / European Patent Office / Office européen des brevets

(11) **EP 2 315 055 B1**

(12) **FASCICULE DE BREVET EUROPEEN**

(45) Date de publication et mention
de la délivrance du brevet:
**17.04.2013   Bulletin 2013/16**

(51) Int Cl.:
***G01V 1/28*** *(2006.01)*

(21) Numéro de dépôt: **10290530.4**

(22) Date de dépôt: **04.10.2010**

(54) **Méthode pour interpréter des enregistrements sismiques répétitives**

Interpretationsmethode für wiederholt gemessene seismische Daten

Interpretation method for repetitive seismic data

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.10.2009   FR 0905050**

(43) Date de publication de la demande:
**27.04.2011   Bulletin 2011/17**

(73) Titulaire: **IFP Energies nouvelles
92852 Rueil-Malmaison Cedex (FR)**

(72) Inventeurs:
• **Rasolofosaon, Patrick
91940 Les Ulis (FR)**
• **Zinszner, Bernard
78360 Montesson (FR)**

(56) Documents cités:
• **RASOLOFOSAON P ET AL: "Petroacoustic Characterization of Reservoir Rocks for Seismic Monitoring Studies", REVUE DE L'INSTITUT FRANCAIS DU PETROLE, EDITIONS TECHNIP. PARIS, FR, vol. 58, no. 6, 1 novembre 2003 (2003-11-01), pages 615-635, XP002277173, ISSN: 1294-4475**
• **RASOLOFOSOAN P ET AL: "Laboratory petroacoustics for seismic monitoring feasibility study", THE LEADING EDGE, SOCIETY OF EXPLORATION GEOPHYSICISTS, US LNKD- DOI: 10.1190/1.1690898, 1 mars 2004 (2004-03-01), pages 252-258, XP002392555, ISSN: 1070-485X**
• **DUFFAUT K ET AL: "VP/VS RATIO VERSUS DIFFERENTIAL STRESS AND ROCK CONSOLIDATION - A COMPARISON BETWEEN ROCK MODELS AND TIME-LAPSE AVO DATA", GEOPHYSICS, SOCIETY OF EXPLORATION GEOPHYSICISTS, US LNKD- DOI: 10.1190/1.2752175, vol. 72, no. 5, 1 septembre 2007 (2007-09-01), pages C81-C94, XP001506262, ISSN: 0016-8033**
• **LONG R., VOGT T., LOWE M., CAWLEY P.: "Measurement of acoustic properties of near-surface soils using an ultrasonic waveguide", GEOPHYSICS, SEG, vol. 69, no. 2, mars 2004 (2004-03), - avril 2004 (2004-04), pages 460-465, XP002584937,**
• **PRIOUL R., JOCKER J.: "Rough contacting surfaces: similarities and differences with traction-free cracks", SEG HOUSTON 2009 INTERNATIONAL EXPOSITION AND ANNUAL MEETING, vol. 28, octobre 2009 (2009-10), pages 3436-3440, XP002584938,**

**Description**

La présente invention concerne le domaine de l'exploitation d'un milieu poreux souterrain, tel que la production d'hydrocarbures issus d'un gisement pétrolier, ou l'injection de gaz acides dans le sous-sol.

Que ce soit dans le cadre de production d'hydrocarbures, ou dans le cadre d'injection de gaz, il est indispensable pour réussir cette exploitation, de pouvoir suivre l'évolution des fluides au sein du milieu poreux. Par exemple, il est nécessaire de déterminer où se trouve les hydrocarbures dans le gisement exploité, puis une fois en production, de suivre l'évolution des hydrocarbures pour déterminer comment améliorer la production. Par exemple, si une partie des hydrocarbures reste bloquée, il peut être décidé de forer d'autres puits de production ou des puits d'injection pour améliorer la récupération de ces hydrocarbures.

Dans le cadre de l'injection de gaz acides, tels que du $CO_2$, il est indispensable de suivre l'évolution du gaz injecté pour déterminer si le stockage s'effectue correctement, à l'endroit souhaité, évaluer la quantité effectivement stockée, et vérifier l'intégrité du réservoir en s'assurant qu'il n'existe aucune fuite. A partir de ces informations, on peut également déterminer si d'autres puits d'injection sont nécessaires.

Pour suivre l'évolution des fluides produits ou injectés au sein d'un milieu poreux, de nombreuses techniques ont été développées par les industriels. Parmi ces techniques, la sismique répétitive, dite sismique 4D, est utilisée dans l'industrie (pétrolière ou environnementale). Une telle technique consiste à réaliser différentes campagnes sismiques, à des moments différents (en général les campagnes sont espacées d'au moins une année). Ainsi, le spécialiste peut suivre l'évolution des fluides du réservoir en production ou du site géologique de stockage.

On détermine alors si la variation de vitesses sismiques (ou impédances) observées sur les différentes sismiques acquises à différents temps calendaires, est principalement due à une variation de pression (fluide et confinement) ou à une substitution de fluide. En d'autres termes, on détermine comment les répartitions de fluides dans le réservoir varient avec le temps.

Cette évolution des fluides produits ou injectés au sein du milieu poreux se caractérise, à partir de deux jeux de données sismiques, par deux paramètres : la variation du module d'incompressibilité du fluide saturant, et la variation de la pression de pore (ou pression de fluide). Le premier paramètre indique le type de fluide en un point donné du milieu, le second indique l'augmentation de pression induite.

Ces deux paramètres sont généralement déterminés à partir des données sismiques inversées (vitesses ou impédances) : la loi de Biot-Gassmann relie le module d'incompressibilité du fluide saturant aux impédances ou vitesses sismiques, et la loi de Hertz-Mindlin relie la pression de pore aux impédances ou vitesses sismiques.

La loi de Hertz-Mindlin est une loi en puissance de type : $V = k.P^h$, où V représente la vitesse, P la pression, k un réel, et h un exposant appelé coefficient de Hertz. Le coefficient de Hertz peut avoir des valeurs très diverses selon la nature des roches et la porosité. Les valeurs sont généralement comprises entre 0,005 et 0,05 pour les calcaires, tant pour les ondes P que pour les ondes S, tandis que pour les grès les valeurs croissent avec la porosité de 0,04 à 0,06 pour les ondes P et de 0,06 à 0,1 pour les ondes S. Le rapport des coefficients de Hertz pour les ondes S et P tourne autour de 1,5 pour les grès. Ce coefficient est déterminé à partir de mesures ultrasonores (typiquement de quelques centaines de kilohertz au mégahertz) sur échantillons de roche au laboratoire, ou à partir de données de diagraphies acoustiques (typiquement de quelques kilohertz à quelques dizaines de kilohertz). Les documents suivants décrivent cette procédure :

- Rasolofosaon, P.N.J, Zinszner, B.E., 2006, Complete Pressure and Fluid Dependence of Seismic Properties of Reservoir Rocks, 68th EAGE conference and exhibition, paper P046

- Rasolofosaon P., Zinszner B., 2004, Laboratory petroacoustics for seismic monitoring feasibility study. The Leading Edge, v. 23; no. 3, p. 252-258.

- Rasolofosaon, P.N.J. and Zinszner, B.E., 2007. The unreasonable success of Gassmann's theory ... Revisited, Journal of seismic Exploration, Volume 16, Number 2-4, 281-301.

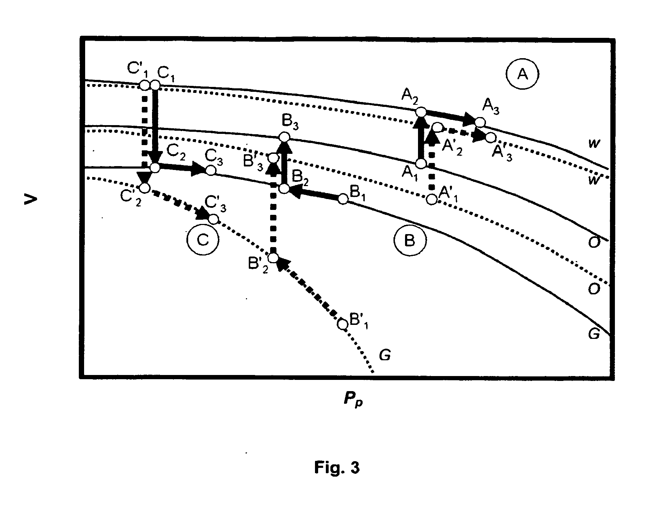

Cependant, la bande de fréquence des données sismiques est typiquement de quelques hertz à quelques dizaines de hertz. Cette différence de fréquences entre les ondes utilisées pour déterminer la loi vitesse/pression et les ondes utilisées lors des campagnes sismiques, peuvent être à l'origine d'interprétations erronées, comme l'illustre la figure 3 (décrite ultérieurement).

L'objet de l'invention est une méthode alternative pour exploiter un milieu poreux souterrain, dans laquelle on interprète des données de sismique 4D au moyen d'une loi de dépendance des vitesses sismiques (ou impédances) en fonction de la pression de pore, prenant en compte la bande de fréquences des données sismiques. La méthode y parvient notamment en corrigeant le coefficient de Hertz au moyen d'une estimation de l'atténuation des ondes utilisées pour définir ce coefficient de Hertz.

**La méthode selon l'invention**

L'invention concerne une méthode pour exploiter un milieu poreux souterrain par injection ou production d'un fluide, dans laquelle on acquiert au moins deux jeux de données sismiques en réalisant au moins deux campagnes sismiques réalisées à des moments différents par émission d'ondes sismiques dans le milieu. On détermine deux jeux de vitesses des ondes sismiques en inversant les jeux de données, et on considère une loi de puissance de type Hertz-Mindlin reliant au moyen d'une puissance appelée coefficient de Hertz, une vitesse de propagation d'ondes à une pression de pore. La méthode comporte les étapes suivantes:

- on détermine ledit coefficient de Hertz au moyen de mesures sur des échantillons dudit milieu en utilisant des ondes de fréquences f1;

- on corrige ledit coefficient de Hertz pour tenir compte d'une différence de fréquence entre lesdites ondes de fréquence f1 et lesdites ondes sismiques, au moyen d'une mesure d'atténuation des ondes de fréquence f1 dans lesdits échantillons;

- on détermine en tout point du milieu poreux une variation de pression de pore au moyen de ladite loi utilisant ledit coefficient de Hertz corrigé et desdits jeux de données inversés, et

- on suit l'exploitation dudit milieu poreux souterrain par injection ou production d'un fluide, en déduisant desdites variations de pression de pore une localisation dudit fluide et éventuellement une substitution dudit fluide au sein du milieu poreux.

On peut corriger le coefficient de Hertz au moyen de la formule suivante :

$$n\left(f_2, P_{diff}^A\right) - n\left(f_1, P_{diff}^A\right) \approx \zeta\,\gamma\left(P_{diff}^A\right)\ln\left(f_2\!\big/\!f_1\right) \;+\; \left[n_0(f_2)\delta(f_2) - n_0(f_1)\delta(f_1)\right] \times P_{diff}^A$$

avec :
$f_2$ :   fréquence centrale des enregistrements sismiques;

$P_{diff}^X$ :   pression différentielle à l'état $X$ (=A ou B);

$n(f, P_{diff})$ :   coefficient de Hertz à la fréquence $f$ et à la pression différentielle $P_{diff}$.

$n\left(f_2, P_{diff}^A\right)$ étant le coefficient de Hertz corrigé et $n\left(f_1, P_{diff}^A\right)$ le coefficient de Hertz non corrigé;

$\gamma$ :   atténuation des ondes P et S aux fréquences $f_i$;

$\zeta$ :   un réel;

$n_0$ :   coefficient de Hertz aux pressions différentielles tendant vers zéro, $n_0(f_2)$ étant le coefficient de Hertz corrigé et $n_0(f_1)$ le coefficient de Hertz non corrigé aux pressions différentielles tendant vers zéro.

Selon un mode de réalisation préféré, on corrige le coefficient de Hertz au moyen de la formule suivante :

$$n_0(f_2) - n_0(f_1) \approx \zeta\gamma\left(P_{diff}\right)\ln\left(f_2\!\big/\!f_1\right)$$

avec :

$f_2$ :   fréquence centrale des enregistrements sismiques;

$n_0$ :   coefficient de Hertz aux pressions différentielles tendant vers zéro, $n_0(f_2)$ étant le coefficient de Hertz corrigé et $n_0(f_1)$ le coefficient de Hertz non corrigé;

$P_{diff}$ :   pression différentielle dans ledit milieu;

$\gamma$ :   atténuation des ondes P et S aux fréquences $f_l$ ;

$\zeta$ :   un réel.

Enfin, selon l'invention, les fréquences f1 peuvent être des fréquences ultrasonores ou soniques.

D'autres caractéristiques et avantages de la méthode selon l'invention, apparaîtront à la lecture de la description ci-après d'exemples non limitatifs de réalisations, en se référant aux figures annexées et décrites ci-après.

## Présentation succincte des figures

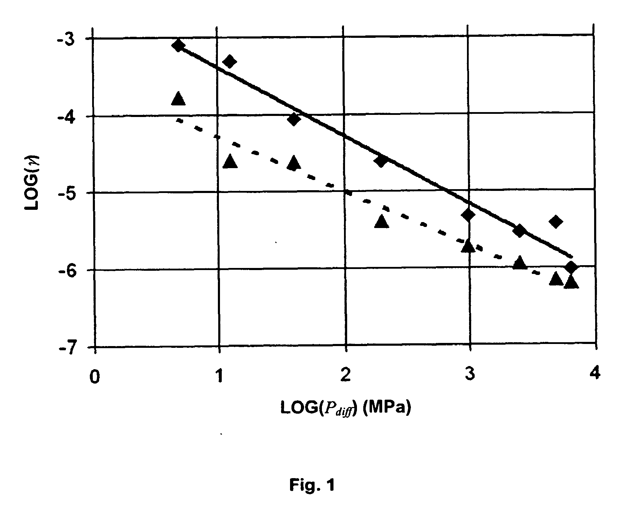

- La figure 1 illustre, sur une échelle bi-logarithmique, des valeurs expérimentales de l'atténuation $\gamma$ de l'onde P (losanges noirs) et de l'onde S (triangles noirs), en fonction de la pression différentielle ($P_{diff}$) mesurées au laboratoire. Les deux ajustements linéaires sont également représentés en trait continu pour l'onde P et en trait discontinu pour l'onde S. Cas du grès de Fontainebleau.

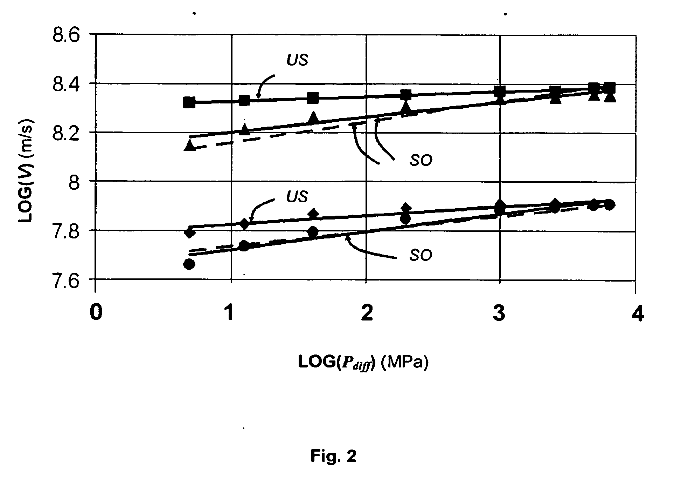

- La figure 2 illustre les vitesses expérimentales ultrasonores (courbes repérées US pour 'ultrasons') et soniques (courbes repérées SO pour 'sonic') de l'onde P (carré et triangle) et de l'onde S (losange et rond) en fonction de la pression différentielle ($P_{diff}$), en échelle bi-logarithmique. Les prédictions théoriques des vitesses P et S soniques (en traits discontinus) sont comparées aux vitesses soniques expérimentales. Cas du grès de Fontainebleau.

- La figure 3 illustre les résultats d'interprétation selon la méthode.

## Description détaillée de la méthode

L'invention concerne une méthode pour exploiter un milieu poreux souterrain, dans laquelle on acquiert et interprète des données de sismique 4D. L'interprétation permet de suivre l'évolution des fluides produits ou injectés au sein d'un milieu poreux. L'idée consiste à calculer une variation de vitesses sismiques (ou impédances) observées sur les différentes sismiques acquises à différents temps calendaires, puis de déterminer si cette variation est principalement due à une variation de pression (fluide et confinement) ou à une substitution de fluide. En d'autres termes, on détermine comment les répartitions de fluides dans le réservoir varient avec le temps.

Pour ce faire, on utilise la loi de Biot-Gassmann, et une loi de dépendance des vitesses sismiques (ou impédances) en fonction de la pression de pore, prenant en compte la bande de fréquences des données sismiques. La méthode y parvient notamment en corrigeant le coefficient de Hertz au moyen d'une estimation de l'atténuation des ondes utilisées pour définir ce coefficient de Hertz. La méthode peut comporter les étapes suivantes :

1. Acquisition et inversion de sismique répétitive pour imager le réservoir souterrain.

2. Établissement de lois de dépendance vitesses sismiques / pression de pore

    2a. Détermination de coefficient de Hertz à partir d'ondes ultrasonores ou soniques

    2b. Détermination d'une relation entre coefficient de Hertz et fréquence des ondes

    2c. Utilisation de la relation entre coefficient de Hertz et fréquence des ondes

3. Interprétations des images sismiques

### 1. Acquisition et inversion de sismique répétitive pour imager le réservoir souterrain.

La sismique-réflexion a pour but d'obtenir une image du sous-sol. Elle consiste à créer un ébranlement à la surface du sol et à enregistrer les très petits déplacements à la surface du sol entraînés par les réflexions de l'onde sur les surfaces de discontinuité des caractéristiques mécaniques (dureté ou compressibilité) des roches.

La sismique répétitive, dite sismique 4D, est utilisée dans l'industrie (pétrolière ou environnementale). Une telle technique consiste à réaliser différentes campagnes sismiques, à des moments différents (en général les campagnes sont espacées d'au moins une année). Ainsi, le spécialiste peut suivre l'évolution des fluides du réservoir en production ou du site géologique de stockage, par comparaison des images issues de chaque campagne.

Selon l'invention, on acquiert au moins deux jeux de données sismiques en réalisant au moins deux campagnes sismiques réalisées à des moments différents par émission d'ondes sismiques dans le milieu.

Puis on transforme ces jeux d'amplitudes sismiques en impédances sismiques ou en vitesses sismiques. Pour ce faire on utilise une technique bien connue des spécialistes : l'inversion stratigraphique. On peut de façon avantageuse utiliser une inversion avant sommation.

2. Établissement de lois de dépendance vitesses sismiques / pression de pore

*2a. Détermination de coefficient de Hertz à partir d'ondes ultrasonores ou soniques*

Les lois utilisées sont les lois de Hertz-Mindlin. Il s'agit d'une loi en puissance de type : $V = k.P^h$, où V représente la vitesse, P la pression, k un réel, et h un exposant appelé coefficient de Hertz. Le coefficient de Hertz peut avoir des valeurs très diverses selon la nature des roches et la porosité.

L'établissement de lois de dépendance vitesses sismiques / pression de pore consiste à calibrer le coefficient de Hertz pour différentes valeurs de saturation en fluide. De façon discrète, on peut avoir une courbe pour un échantillon totalement saturée en eau, une autre pour un échantillon totalement saturée en gaz ou huile. Les documents suivants décrivent cette procédure :

- Rasolofosaon, P.N.J, Zinszner, B.E., 2006, Complete Pressure and Fluid Dependence of Seismic Properties of Reservoir Rocks, 68th EAGE conference and exhibition, paper P046

- Rasolofosaon P., Zinszner B., 2004, Laboratory petroacoustics for seismic monitoring feasibility study. The Leading Edge, v. 23; no. 3, p. 252-258.

- Rasolofosaon, P.N.J. and Zinszner, B.E., 2007. The unreasonable success of Gassmann's theory ... Revisited, Journal of seismic Exploration, Volume 16, Number 2-4,281-301.

A partir de mesures ultrasonores de laboratoire, on mesure sur les échantillons réservoir considérés, les vitesses/impédances avec différents fluides en fonctions de la pression de pore Pp (cf. Rasolofosaon et Zinszner, 2004, 2006 et 2007). On trace alors des courbes de calibration telles que celles de la figure 3.

Les courbes de calibration peuvent être également obtenues par des mesures de diagraphies acoustiques, aux fréquences soniques et non plus aux fréquences ultrasonores comme au laboratoire. Les courbes de calibrations sonic sont évidemment moins détaillées qu'au laboratoire, car on ne dispose que de quelques mesures de vitesses P et S, sous différentes pressions de fluide dans le réservoir qui sont classiquement mesurées simultanément par d'autres diagraphies (par exemple PLT etc...).

Ces courbes de calibration sont donc obtenues soit aux fréquences soniques, soit aux fréquences ultrasonores, et non aux fréquences sismiques. Cependant, une courbe de calibration dépend de manière importante de la fréquence (courbes en traits continus comparées aux courbes en traits discontinus sur la figure 3).

2b. Détermination d'une relation entre coefficient de Hertz et fréquence des ondes

Pour corriger cet effet de fréquence, selon l'invention, on modifie ces courbes par une mesure de l'atténuation ultrasonore des ondes P et S, dans le cas de calibration aux fréquences ultrasonores au laboratoire, et de l'atténuation sonique des ondes P et S, dans le cas de calibration aux fréquences soniques avec les diagraphies. Ces mesures conventionnelles d'atténuations sont assez connues dans la littérature et détaillées dans différentes référence (voir par exemple, pour les mesures d'atténuations ultrasonores: Bourbié, T., Coussy, O., Zinszner, B., 1987, Acoustics of porous media, Editions Technip, Paris, et pour les mesures d'atténuation soniques : Serra, O., 2008, The Well Logging Handbook, Editions Technip, Paris).

Concrètement, on définit une relation, permettant de modifier le coefficient de Hertz déterminé précédemment (étape 2a) en fonction de l'atténuation des ondes utilisées pour déterminer ce coefficient (de fréquence f1) et de la fréquence sismique (f2).

Selon un mode préféré de réalisation, la formule utilisée est :

$$n_o(f_2) - n_o(f_1) \approx \zeta \; \gamma\left(P_{diff}\right) \ln\left(f_2 / f_1\right)$$

Les formules de passage des vitesses aux fréquences ultrasonores aux vitesses aux fréquences sismiques, utilisant les atténuations P et S, sont détaillées ci-après.

Les notations suivantes sont utilisées dans la description de l'invention.

$P_{diff}$ : pression différentielle dans un réservoir, différence entre la pression de confinement et la pression de pore.

$P_{conf}$ : pression de confinement, pression des sédiments

$P_{pore}$ : pression de pore, pression régnant dans le fluide contenu dans le réservoir:

$f$ : fréquence

$P_{diff}^{X}$ : pression différentielle à l'état X (=A ou B),

$n(f,P_{diff})$ : exposant de la loi de Hertz à la fréquence $f$ et à la pression différentielle $P_{diff}$. De plus nous supposons que l'exposant de Hertz $n(f,P_{diff})$ ne dépend que faiblement de la pression différentielle, soit: $n(f,P_{diff})=n_o(f)(1+ \delta(f) \times P_{diff})$

$\delta$ : une fonction de la fréquence, indépendante de la pression différentielle $P_{diff}$ et homogène à l'inverse d'une pression.

$\gamma$ : atténuation ($\gamma_P$ et $\gamma_S$, respectivement de l'onde P et de l'onde S)

$$\gamma = \frac{1}{\pi} \tan^{-1}(\frac{1}{Q})$$

Q : facteur de qualité indépendant de la fréquence (modèle à Q-constant ),

$\zeta$ : exposant de la loi puissance supposée, reliant l'atténuation $\gamma$ et la pression différentielle $P_{diff}$.

$\Delta P_{diff}$ : accroissement de pression différentielle entre deux états A et B

$$\Delta P_{diff} = P_{diff}^{B} - P_{diff}^{A}$$

$f_1, f_2$ : deux fréquences quelconques entre lesquels vont être exploitées les équations d'atténuation des vitesses. Par exemple si l'on s'intéresse au passage des vitesses soniques aux vitesses sismiques, la fréquence $f_1$ désigne la fréquence centrale de l'outil sonique (typiquement autour du kilohertz) et la fréquence $f_2$ la fréquence centrale des enregistrements sismiques (typiquement autour de quelques hertz à quelques dizaines de hertz).

$n_0$ : coefficient de Hertz aux pressions différentielles tendant vers zéro ($P_{diff} \approx 0$)

La pression différentielle $P_{diff}$ dans un réservoir est la différence entre la pression de confinement $P_{conf}$, approximativement égale à la pression géostatique due au poids des sédiments sus-jacents, et la pression de pore $P_{pore}$, ou pression régnant dans le fluide contenu dans le réservoir:

$$(1) \qquad P_{diff} = P_{conf} - P_{pore}$$

Il est clairement établi que les propriétés sismiques, vitesse et atténuation, sont essentiellement fonctions de la pression différentielle $P_{diff}$, et non des valeurs particulières individuelles de la pression de confinement $P_{conf}$ ou de la pression de pore $P_{pore}$ (par exemple, Rasolofosaon et Zinszner, 2006).

Considérons la loi puissance la plus simple reliant la vitesse P ou S et la pression différentielle $P_{diff}$ à la fréquence $f$, ou loi de Hertz-Mindlin (Rasolofosaon et Zinszner, 2004):

$$(2) \qquad \frac{V(P_{diff}^{A},f)}{V(P_{diff}^{B},f)} = \left(\frac{P_{diff}^{A}}{P_{diff}^{B}}\right)^{n(f,P_{diff})}$$

où $P_{diff}^{X}$ la pression différentielle à l'état X (=A ou B), et $n(f,P_{diff})$ désigne l'exposant de la loi de Hertz à la fréquence $f$ et à la pression différentielle $P_{diff}$. De plus, nous supposons que l'exposant de Hertz $n(f,P_{diff})$ ne dépend que faiblement de la pression différentielle, soit:

$$(3) \qquad n(f, P_{diff}) = n_O(f)\left(1 + \delta(f) \times P_{diff}\right)$$

où les dépendances en fréquence et en pression de $n$ ont été découplées, et où l'hypothèse de faible dépendance de $n$ vis-à-vis de $P_{diff}$ impose:

$$(4) \qquad \left| \delta(f) \times P_{diff} \right| << 1$$

$\delta$ une fonction de la fréquence, indépendante de la pression différentielle $P_{diff}$ et homogène à l'inverse d'une pression.

Par ailleurs nous introduisons une loi reliant l'atténuation $\gamma = \dfrac{1}{\pi} \tan^{-1}(\dfrac{1}{Q})$ [Q étant le facteur de qualité, modèle à Q-constant, indépendant de la fréquence (Bourbié et al., 1987) et la pression différentielle. On suppose qu'il s'agit aussi d'une loi puissance caractérisée par un exposant $\zeta$ :

$$(5) \qquad \frac{\gamma(P_{diff}^A)}{\gamma(P_{diff}^B)} = \left(\frac{P_{diff}^A}{P_{diff}^B}\right)^{\varsigma}$$

La figure 1 illustre, sur une échelle bi-logarithmique, des valeurs expérimentales de l'atténuation $\gamma$ de l'onde P (losanges noirs) et de l'onde S (triangles noirs), en fonction de la pression différentielle ($P_{diff}$) mesurées au laboratoire. Les deux ajustements linéaires sont également représentés en trait continu pour l'onde P et en trait discontinu pour l'onde S. Cas du grès de Fontainebleau.

Par ailleurs si l'on admet que le modèle d'atténuation est à Q-constant (Bourbié et al., 1987) nous avons la relation d'atténuation suivante à la pression différentielle $P_{diff}$ :

$$(6) \qquad \frac{V(P_{diff}, f_2)}{V(P_{diff}, f_1)} = \left(\frac{f_2}{f_1}\right)^{\gamma(P_{diff})}$$

L'équation (3) reportée dans (2) conduit alors à:

$$(7)$$

$$\frac{V(P_{diff}^A, f)}{V(P_{diff}^B, f)} = \frac{\left(P_{diff}^A\right)^{n_O(f)\left(1+\delta(f) \times P_{diff}^A\right)}}{\left(P_{diff}^B\right)^{n_O(f)\left(1+\delta(f) \times P_{diff}^B\right)}} = \left(\frac{P_{diff}^A}{P_{diff}^B}\right)^{n_O(f)\left(1+\delta(f) \times P_{diff}^A\right)} \left(P_{diff}^B\right)^{-n_O(f)\delta(f) \times \Delta P_{diff}}$$

où $\Delta P_{diff} = P_{diff}^B - P_{diff}^A$ désigne l'accroissement de pression différentielle supposé faible , c'est-à-dire:

$$(8) \qquad \Delta P_{diff} << P_{diff}^A$$

De plus le rapport membre à membre des deux équations d'atténuation (6) écrites aux pressions différentielles

$P_{diff}^A$ et $P_{diff}^B$ se réduit à:

$$(9) \quad \frac{V(P_{diff}^A, f_2)}{V(P_{diff}^B, f_2)} = \left( \frac{V(P_{diff}^A, f_1)}{V(P_{diff}^B, f_1)} \right) \left( f_2 \big/ f_1 \right)^{\gamma\left(P_{diff}^A\right) - \gamma\left(P_{diff}^B\right)}$$

Les équations (7) et (9) entrainent:

$$(10) \left( \frac{P_{diff}^A}{P_{diff}^B} \right)^{n_o(f_2)\left(1 + \delta(f_2) \times P_{diff}^A\right) - n_o(f_1)\left(1 + \delta(f_1) \times P_{diff}^A\right)} \left( P_{diff}^B \right)^{-[n_o(f_2)\delta(f_2) - n_o(f_1)\delta(f_1)] \times \Delta P_{diff}}$$

$$= \left( f_2 \big/ f_1 \right)^{\gamma\left(P_{diff}^A\right) - \gamma\left(P_{diff}^B\right)}$$

Soit en prenant le logarithme de chaque membre:

$$(11) \quad \left[ n_o(f_2)\left(1 + \delta(f_2) \times P_{diff}^A\right) - n_o(f_1)\left(1 + \delta(f_1) \times P_{diff}^A\right) \right] \ln\left( \frac{P_{diff}^A}{P_{diff}^B} \right)$$

$$- [n_o(f_2)\delta(f_2) - n_o(f_1)\delta(f_1)] \times \Delta P_{diff} = \left[ \gamma\left(P_{diff}^A\right) - \gamma\left(P_{diff}^B\right) \right] \ln\left( f_2 \big/ f_1 \right)$$

En supposant l'accroissement de pression différentielle $\Delta P_{diff} = P_{diff}^B - P_{diff}^A$ faible,

$P_{diff}^A$ et $P_{diff}^B = P_{diff}^A + \Delta P_{diff}$ ne sont pas trop différents l'un de l'autre, et par conséquent nous avons:

$$(12) \quad \ln\left( P_{diff}^A \big/ P_{diff}^B \right) = \ln\left( \frac{P_{diff}^A}{P_{diff}^A + \Delta P_{diff}} \right) \approx -\frac{\Delta P_{diff}}{P_{diff}^A}$$

de même, sous la même hypothèse, en posant $\gamma(P_{diff}^B) = \gamma(P_{diff}^A) + \Delta\gamma$ la différentielle logarithmique de l'équation (5) fournit:

$$(13) \quad \frac{\Delta\gamma}{\gamma(P_{diff}^A)} \approx \varsigma \frac{\Delta P_{diff}}{P_{diff}^A}$$

Les équations (12) et (13) reportées dans l'équation (11) conduisent à:

$$(14) \quad -[n_o(f_2)(1+\delta(f_2)\times P_{diff}^A)-n_o(f_1)(1+\delta(f_1)\times P_{diff}^A)]\left(\frac{\Delta P_{diff}}{P_{diff}^A}\right)$$

$$-[n_o(f_2)\delta(f_2)-n_o(f_1)\delta(f_1)]\times \Delta P_{diff} \approx -\zeta\,\gamma\!\left(P_{diff}^A\right)\left(\frac{\Delta P_{diff}}{P_{diff}^A}\right)\ln\!\left(f_2/f_1\right)$$

Soit, en divisant chaque membre par $\left(\dfrac{\Delta P_{diff}}{P_{diff}^A}\right)$ :

$$(15) \quad n\,(f_2,P_{diff}^A)-n\,(f_1,P_{diff}^A)\approx \zeta\,\gamma\!\left(P_{diff}^A\right)\ln\!\left(f_2/f_1\right) \;+\; [n_o(f_2)\delta(f_2)-n_o(f_1)\delta(f_1)]\times P_{diff}^A$$

Cette équation est la relation recherchée, liant l'atténuation contenue dans le premier terme du membre de gauche en $\ln(f_2/f_1)$, et l'effet de pression, couplé à une dépendance en fréquence, contenu dans le second terme du membre de gauche. Les deux membres de l'égalité sont fonctions de la fréquence et de la pression différentielle au premier ordre. Plus précisément, l'hypothèse de perturbation au premier ordre inclue d'une part l'hypothèse de faible dépendance de n vis-à-vis de $P_{diff}$ [condition (4)], et d'autre part, l'hypothèse de faible accroissement de pression différentielle $\Delta P_{diff} = P_{diff}^B - P_{diff}^A$ [condition (8)].

A l'ordre zéro, du fait de la condition (4), l'équation (15) se simplifie notablement en se réduisant à:

$$(16) \quad n_o(f_2)-n_o(f_1)\approx \zeta\,\gamma\!\left(P_{diff}\right)\ln\!\left(f_2/f_1\right)$$

En d'autre termes à l'ordre zéro, la dépendance de $\gamma$ en fonction de la pression différentielle peut être négligée. Il est toujours possible d'utiliser l'équation complète (15).

<u>2c. Utilisation de la relation entre coefficient de Hertz et fréquence des ondes</u>

A partir de cette relation, on détermine de nouveaux coefficient de Hertz, et on définit donc une nouvelle loi de dépendance vitesses sismiques / pression de pore. Cette loi est très bien vérifiée expérimentalement comme l'illustre la figure 2. Cette figure illustre les vitesses expérimentales ultrasonores (courbes repérées US pour 'ultrasons') et soniques (courbes repérées SO pour 'sonic') de l'onde P (carré et triangle) et de l'onde S (losange et rond) en fonction de la pression différentielle (Pdiff), en échelle bi-logarithmique. Les prédictions théoriques des vitesses P et S soniques (en traits discontinus) sont comparées aux vitesses soniques expérimentales. Les ajustements linéaires de ces données expérimentales sont excellents, validant une nouvelle fois la loi de Hertz. De plus les prédictions théoriques des vitesses P et S soniques (en traits discontinus) résumées par la formule (16) sont tout-à-fait comparables aux vitesses soniques expérimentales.

Ainsi, d'une part le coefficient de Hertz de la loi puissance entre la vitesse et la pression différentielle (équation 2) n'est pas la même dans les différentes bandes de fréquences et, d'autre part cela est vérifié expérimentalement et prédit par la formule simple (16).

Nous disposons alors de nouvelles courbes de dépendances vitesses sismiques / pression de pore aux fréquences sismiques.

3. Interprétations des images sismiques

L'interprétation des images sismiques, issues de la sismique 4D et de l'inversion, a pour objectif de déterminer si la variation de vitesses sismiques (ou impédances) observées sur les différentes sismiques acquises à différents temps calendaires, est principalement due à une variation de pression (fluide et confinement) ou à une substitution de fluide. Cette évolution des fluides produits ou injectés au sein du milieu poreux se caractérise, à partir de deux jeux de données sismiques, par deux paramètres : la variation du module d'incompressibilité du fluide saturant, et la variation de la pression de pore. Le premier paramètre indique le type de fluide en un point donné du milieu, le second indique l'augmentation de pression induite.

Ces deux paramètres sont généralement déterminés à partir des données sismiques inversées (vitesses ou impédances) : la loi de Biot-Gassmann relie, entre autres, le module d'incompressibilité du fluide saturant aux impédances ou vitesses sismiques, et la loi de Hertz-Mindlin relie la pression de pore aux impédances ou vitesses sismiques.

Selon l'invention, on utilise la loi de Hertz-Mindlin avec un coefficient de Hertz modifié selon l'étape 2.

La figure 3 illustre les résultats d'interprétation selon la méthode. Sur cette figure sont représentées les variations des vitesses V en fonction de la pression de pore Pp, dans une roche réservoir clastique typique (grès), saturée d'eau (W), d'huile (O) ou de gaz (G), et pour trois types d'exploitation : le balayage à l'eau (repères A), la production de gaz (repères B) et l'injection de gaz (repères C) telle l'injection de $CO_2$ dans un aquifère salin. Les courbes des vitesses sismiques selon l'invention sont indiquées par des courbes en traits continus et les vitesses ultrasonores "classiques" par des courbes en traits discontinus.

La vitesse sismique augmente avec la pression différentielle $P_{diff}$ comme l'illustre la figure 2 et l'équation (2). Comme la pression de confinement $P_{conf}$, égale à la pression géostatique due au poids des sédiments sus-jacents, reste approximativement constante lors de l'exploitation d'un réservoir, seule la pression de pore $P_{pore}$ varie substantiellement. Aussi, à une augmentation de la pression de pore correspond une diminution de la pression différentielle et donc, une diminution de la vitesse ou de l'impédance sismique, ce qui est observé sur la figure 3. D'après l'équation (16) cette effet est beaucoup plus marqué aux basses fréquences, par exemple aux fréquences sismiques (typiquement de quelques hertz à quelques dizaines de hertz), qu'aux hautes fréquences, par exemple aux fréquences ultrasonores du laboratoire (typiquement de quelques centaines de kilohertz au mégahertz).

Considérons ainsi une injection de gaz (repères C), telle l'injection de $CO_2$ dans un aquifère salin. Si l'on se base sur des données ultrasonores au laboratoire, lors d'une injection de gaz (repère C) dans un réservoir la pression de pore augmente (état $C_2$ à état $C_3$) et induit une diminution d'impédance notablement moins importante que celle induite par la substitution de l'eau par du gaz (état $C_1$ à état $C_2$) lors du même mode d'exploitation. En revanche, toujours lors du même mode d'exploitation, dans la bande de fréquence sismique (courbes discontinues) l'augmentation de pression de pore (état $C'_1$ à état $C'_2$) peut induire une diminution d'impédance tout-à-fait comparable à celle induite par la substitution de l'eau par de le gaz (état $C'_2$ à état $C'_3$).

Ainsi une interprétation des données de sismique 4D basées uniquement sur la loi vitesses-pression ultrasonore obtenue au laboratoire conclurait, de manière erronée, à une influence majeure des substitutions de fluides par rapport aux variations de pression de pore.

Le phénomène est encore plus marqué lors de la production de gaz (repère B). Si l'on se base sur des données ultrasonores au laboratoire, lors d'une production de gaz dans un réservoir la pression de pore diminue (état $B_1$ à état $B_2$) et induit par conséquent une augmentation d'impédance notablement moins importante que celle induite par la substitution du gaz de l'huile (état $B_2$ à état $B_3$) lors du même mode d'exploitation. En revanche, toujours lors du même mode d'exploitation, dans la bande de fréquence sismique (courbes discontinues) la diminution de pression de pore (état $B'_1$ à état $B'_2$) peut induire une variation d'impédance encore plus importante que lors de l'injection de gaz (état $C'_2$ à état $C'_3$) et tout-à-fait comparable à celle induite par la substitution de gaz par de l'huile (état $B'_2$ à état $B'_3$). Ainsi une interprétation des données de sismique 4D basées uniquement sur la loi vitesses-pression ultrasonore obtenue au laboratoire conclurait une nouvelle fois, de manière erronée, à une influence majeure des substitutions de fluides par rapport aux variations de pression de pore.

Dans le cas de récupération assistée par balayage à l'eau (repère A) le phénomène est beaucoup moins important. En effet l'influence de la pression de pore mesurée par ultrasons (état $A_2$ à état $A_3$) semble tout-à-fait comparable à celle mesurée aux fréquences sismiques (état $A'_2$ à état $A'_3$). Toutefois l'influence de la substitution fluide semble un peu plus marquée aux fréquences sismiques (état $A'_1$ à état $A'_2$) qu'aux fréquences ultrasonores (état $A_1$ à état $A_2$).

L'invention permet donc de contribuer à l'interprétation correcte des sismiques 4D dans des opérations d'exploitation du sous-sol, telles l'injection de gaz, la production de gaz ou le balayage à l'eau (figure 1), que ce soit dans le domaine environnemental (stockage géologique de $CO_2$) ou dans le domaine de l'industrie pétrolière ou gazière. L'invention trouve des applications dans le domaine de l'exploitation des réservoirs souterrain ('monitoring' sismique), dans le domaine du forage (problème sécurité-évaluation des pressions de fluides dans le sous-sol), et dans l'évaluation des systèmes pétroliers (modélisation des migrations de fluides).

En effet, ce brevet permet de faire plus correctement la part entre les variations de pressions (fluide et confinement) et des substitutions fluides dans les modifications observées sur les différentes sismiques observées à différents temps calendaires, et par conséquent de fournir un modèle de réservoir plus réaliste loin des puits et un meilleur calage de production ("history matching"), et donc une meilleure prévision de l'exploitation du réservoir.

Les principaux "bénéfices" attendus sont pour le management de réservoir. En effet, la méthode, permettant de mieux décrire comment les répartitions de fluides dans le réservoir varient avec le temps. Ces "bénéfices" peuvent se regrouper autour des problématiques suivantes:

- Compartimenter le réservoir: la méthode permet de repérer les différents compartiments du réservoir et, par conséquent, d'estimer les volumes d'huile et de gaz non récupérés (dans le domaine de l'industrie pétrolière), ou de repérer et estimer les volumes de C02 effectivement stockés dans le sous-sol et contrôler l'intégrité des couvertures (dans le domaine environnemental).

- Connectivité des différents compartiments: la méthode, permettant de repérer les différents compartiments du réservoir et leur balayage par les fluides, permet d'aider à prendre les meilleures décisions pour l'exploitation du réservoir (emplacement des nouveaux puits par exemple dans le domaine pétrolier, intégrité des couvertures pour le stockage de CO2 : fuites de CO2 ou pas...).

- Répartition des contacts fluides: la méthode, permettant de mieux suivre l'évolution spatiale des contacts fluides lors de la production, permet de confirmer ou, au contraire d'invalider le modèle d'écoulement, et par conséquent permet au producteur pétrolier de modifier son programme de récupération. Dans le domaine de l'environnement, cela permet de suivre plus distinctement le front de CO2 stocké dans le sous-sol.

**Revendications**

1. Méthode pour exploiter un milieu poreux souterrain par injection ou production d'un fluide, dans laquelle on acquiert au moins deux jeux de données sismiques en réalisant au moins deux campagnes sismiques réalisées à des moments différents par émission d'ondes sismiques dans ledit milieu, on détermine deux jeux de vitesses desdites ondes sismiques en inversant lesdits jeux de données, et on considère une loi de puissance de type Hertz-Mindlin reliant au moyen d'une puissance appelée coefficient de Hertz, une vitesse de propagation d'ondes à une pression de pore, **caractérisé en ce que** l'on réalise les étapes suivantes:

   - on détermine ledit coefficient de Hertz au moyen de mesures sur des échantillons dudit milieu en utilisant des ondes de fréquences f1 différentes de fréquences sismiques;
   - on corrige ledit coefficient de Hertz pour tenir compte d'une différence de fréquence entre lesdites ondes de fréquence f1 et lesdites ondes sismiques, au moyen d'une mesure d'atténuation des ondes de fréquence f1 dans lesdits échantillons;
   - on détermine en tout point du milieu poreux une variation de pression de pore au moyen de ladite loi utilisant ledit coefficient de Hertz corrigé et desdits jeux de données inversés, et
   - on suit l'exploitation dudit milieu poreux souterrain par injection ou production d'un fluide, en déduisant desdites variations de pression de pore une localisation dudit fluide et éventuellement une substitution dudit fluide au sein du milieu poreux.

2. Méthode selon la revendication 1, dans laquelle on corrige ledit coefficient de Hertz au moyen de la formule suivante :

$$n\left(f_2, P_{diff}^A\right) - n\left(f_1, P_{diff}^A\right) \approx \zeta\, \gamma\left(P_{diff}^A\right) \ln\left(f_2/f_1\right) + \left[n_o(f_2)\delta(f_2) - n_o(f_1)\delta(f_1)\right] \times P_{diff}^A$$

avec :

$f_2$ : fréquence centrale des enregistrements sismiques;

$P_{diff}^X$ : pression différentielle à l'état $X$ (=A ou B);

$n(f, P_{diff})$: coefficient de Hertz à la fréquence f et à la pression différentielle $P_{diff}$. $n\left(f_2, P_{diff}^A\right)$ étant le coefficient de Hertz corrigé et $n$ ($f_1$, $P_{diff}^A$) le coefficient de Hertz non corrigé;

$\gamma$ : atténuation des ondes P et S aux fréquences $f_1$;

$\zeta$ : un réel;

$n_0$ : coefficient de Hertz aux pressions différentielles tendant vers zéro, $n_0(f_2)$ étant le coefficient de Hertz corrigé et $n_0(f_1)$ le coefficient de Hertz non corrigé aux pressions différentielles tendant vers zéro.

**3.** Méthode selon la revendication 1, dans laquelle on corrige ledit coefficient de Hertz au moyen de la formule suivante :

$$n_0(f_2) - n_0(f_1) \approx \zeta\gamma\left(P_{diff}\right)\ln\left(f_2 \Big/ f_1\right)$$

avec :

$f_2$ : fréquence centrale des enregistrements sismiques;

$n_0$ : coefficient de Hertz aux pressions différentielles tendant vers zéro, $n_0(f_2)$ étant le coefficient de Hertz corrigé et $n_0(f_1)$ le coefficient de Hertz non corrigé;

$P_{diff}$ : pression différentielle dans ledit milieu;

$\gamma$ : atténuation des ondes P et S aux fréquences $f_1$;

$\zeta$: un réel.

**4.** Méthode selon l'une des revendications 1 à 3, dans laquelle les fréquences f1 sont des fréquences ultrasonores.

**5.** Méthode selon l'une des revendications 1 à 3, dans laquelle les fréquences f1 sont des fréquences soniques.

## Claims

**1.** A method of exploiting an underground porous medium by injection or production of a fluid, in which at least two sets of seismic data are acquired by Implementing at least two seismic campaigns performed at different times by the emission of seismic waves in said medium, two sets of speeds of said seismic waves are determined by inverting said sets of data, and a Hertz-Mindlin type power law is considered, linking by means of a power referred to as the Hertz coefficient a speed of wave propagation to a pore pressure, **characterised by** performing the following steps:

- determining said Hertz coefficient by means of measurements on samples of said medium using waves of frequencies f1 different from seismic frequencies;
- correcting said Hertz coefficient to take account of a frequency difference between said waves of frequency f1 and said seismic waves by means of a measurement of attenuation of the waves of frequency f1 in said samples;
- determining at any point of the porous medium a variation in the pore pressure by means of said law using said corrected Hertz coefficient and said sets of inverted data, and
- monitoring exploitation of said underground porous medium by injection or production of a fluid, by deducing from said variations in pore pressure a location of said fluid and optionally substitution of said fluid within the porous medium.

**2.** A method according to claim 1 wherein said Hertz coefficient is corrected by means of the following formula:

$$n\left(f_2,P_{diff}^A\right) - n\left(f_1,P_{diff}^A\right) \approx \zeta\gamma\left(P_{diff}^A\right)\mathrm{In}\left(\frac{f_2}{f_1}\right) + \left[n_0(f_2)\delta(f_2) - n_0(f_1)\delta(f_1)\right]\times P_{diff}^A$$

with:

$f_2$: central frequency of the seismic recordings;

$P_{diff}^x$ : differential pressure at the state X(=A or B);

n(f, $P_{diff}$): Hertz coefficient at the frequency f and at the differential pressure $P_{diff}$, n ($f_2$, $P_{diff}^{\square}$) being the corrected Hertz coefficient and n($f_1$, $P_{diff}^{A}$) being the uncorrected Hertz coefficient;

$\gamma$: attenuation of the waves P and S at the frequencies $f_1$;

$\zeta$: a real number, and

$n_0$: Hertz coefficient at the differential pressures tending towards zero, $n_0(f_2)$ being the corrected Hertz coefficient and $n_0(f_1)$ being the uncorrected Hertz coefficient at the differential pressures tending towards zero.

3. A method according to claim 1 wherein said Hertz coefficient is corrected by means of the following formula:

$$n_0(f_2) - n_0(f_1) \approx \zeta \gamma (P_{diff}) \ln\left(\frac{f_2}{f_1}\right)$$

with:

$f_2$: central frequency of the seismic recordings;

$n_0$: Hertz coefficient at the differential pressures tending towards zero, $n_0(f_2)$ being the corrected Hertz coefficient and $n_0(f_1)$ being the uncorrected Hertz coefficient;

$P_{diff}$ : differential pressure in said medium;

$\gamma$: attenuation of the waves P and S at the frequencies $f_1$; and

$\zeta$: a real number

4. A method according to one of claims 1 to 3 wherein the frequencies f1 are ultrasonic frequencies.

5. A method according to one of claims 1 to 3 wherein the frequencies f1 are sonic frequencies.

**Patentansprüche**

1. Verfahren zum Ausbeuten einer unterirdischen porösen Umgebung durch Einpressung oder Erzeugung eines Fluids, In dem mindestens zwei Sätze von seismischen Daten erfasst werden, indem mindestens zwei seismische Messreihen ausgeführt werden, die zu unterschiedlichen Zeitpunkten durch Ausstrahlung seismischer Wellen in der Umgebung ausgeführt werden, durch Umkehren der Datensätze zwei Sätze von Geschwindigkeiten der seismischen Wellen bestimmt werden und ein Potenzgesetz des Typs Hertz-Mindlin berücksichtigt wird, das mittels einer Potenz, die Hertz-Koeffizient genannt wird, eine Wellenausbreitungsgeschwindigkeit mit einem Porendruck verbindet, **dadurch gekennzeichnet, dass** die folgenden Schritte ausgeführt werden:

- Bestimmen des Hertz-Koeffizienten mittels Messungen auf Proben der Umgebung unter Verwendung von Wellen mit Frequenzen f1, die sich von seismischen Frequenzen unterscheiden;

- Korrigieren des Hertz-Koeffizienten zum Berücksichtigen eines Frequenzunterschieds zwischen den Wellen mit der Frequenz f1 und den seismischen Wellen, mittels einer Messung der Dämpfung der Wellen mit der Frequenz f1 in den Proben;

- Bestimmen einer Porendruckänderung an jedem Punkt der porösen Umgebung mittels des Gesetzes unter Verwendung des Korrigierten Hertz-Koeffizienten und der umgekehrten Datensätze, und

- Verfolgen der Ausbeutung der unterirdischen porösen Umgebung durch Einpressung oder Erzeugung eines Fluids, durch Ableiten einer Ortsbestimmung des Fluids und gegebenenfalls einer Ersetzung des Fluids in der porösen Umgebung von den Porendruckänderungen.

2. Verfahren nach Anspruch 1, wobei der Hertz-Koeffizient mittels der folgenden Formel korrigiert wird:

Fig. 1

**Fig. 2**

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RASOLOFOSAON, P.N.J ; ZINSZNER, B.E.** Complete Pressure and Fluid Dependence of Seismic Properties of Reservoir Rocks. *68th EAGE conference and exhibition, paper P046,* 2006
- **RASOLOFOSAON P. ; ZINSZNER B.** Laboratory petroacoustics for seismic monitoring feasibility study. *The Leading Edge,* 2004, vol. 23 (3), 252-258

- **RASOLOFOSAON, P.N.J. ; ZINSZNER, B.E.** The unreasonable success of Gassmann's theory. *Journal of seismic Exploration,* 2007, vol. 16 (2-4), 281-301
- **BOURBIÉ, T. ; COUSSY, O. ; ZINSZNER, B.** Acoustics of porous media. 1987
- **SERRA, O.** The Well Logging Handbook. 2008